# EUROPÄISCHE PATENTSCHRIFT

(11) **EP 1 724 063 B1**
(45) Veröffentlichungstag und Bekanntmachung des Hinweises auf die Patenterteilung: **07.11.2007**
(21) Anmeldenummer: 06005918.5
(22) Anmeldetag: 23.03.2006
(51) Int. Cl.: B24C 3/04, B24C 1/04, B24C 9/00

(54) **Sandstrahlvorrichtung**
Sand blasting device
Dispositif de sablage

(30) Priorität: 21.05.2005 DE 202005007992 U
(43) Veröffentlichungstag der Anmeldung: 22.11.2006
(73) Patentinhaber: Friedrich Goldmann GmbH & Co, 68229 Mannheim (DE)
(72) Erfinder: Goldmann, Klaus-Dieter, 68229 Mannheim (DE)
(74) Vertreter: Schmid, Rudolf

(56) Entgegenhaltungen:
- EP-A- 0 614 802
- EP-A- 0 712 694
- EP-A- 1 410 873
- DE-U1- 8 625 115
- DE-U1- 20 306 753
- US-A- 3 765 761
- US-A- 4 064 656
- US-A- 5 364 472
- US-A1- 2002 159 868

## Beschreibung

Die Erfindung betrifft Sandstrahlvorrichtungen, insbesondere zum Strahlen von Werkstücken aus Stein, Glas oder Holz, mit den Merkmalen des Oberbegriffs des Anspruchs 1.

Aus der DE 20306753 U ist eine Sandstrahlkabine bekannt zum Strahlen von Inschriften und Ornamenten auf Werkstücken aus Stein, Glas oder Holz mit einer schallschluckenden Kabine zur Aufnahme eines Werkstücks in einem Arbeitsbereich, die an mindestens einer vertikalen Frontseite eine durch einen vertikal verstellbaren Rollvorhang mit mindestens einer Sichtfläche im wesentlichen abgedeckte Öffnung zum Arbeitsbereich aufweist. Der Rollvorhang ist mit einem abdichtbaren Durchlaß für je ein in vertikaler Richtung mit dem Rollvorhang und in horizontaler Richtung motorisch oder manuell geführtes Strahlrohr versehen. Die Kabine weist einen Lufteinlaß über dem Arbeitsbereich und einen Boden mit einer Absaugrinne zur Strahlmittelrückförderung unter dem Arbeitsbereich für im wesentlichen von oben nach unten strömenden Luftwechsel für gute Sichtverhältnisse in der Kabine auf. Steine werden bei diesem Stand der Technik zur Bearbeitung außerhalb der Kabine auf eine ins Innere der Kabine teleskopierbare Rollbahn gestellt, so dass die Steine in den Arbeitsbereich hinter die abgedeckte Öffnung im verstellbaren Rollvorhang im Inneren der Kabine geschoben werden können und dort verschiebbar bleiben. Diese Sandstrahlkabinen des Standes der Technik sind auch für relativ niedrige Strahlleistungen effektiv und kostengünstig.

Bekannt ist aus der EP 0 291 707 ebenfalls eine Sandstrahlkabine zum Strahlen von Inschriften und Ornamenten auf Werkstücken aus Stein, Glas oder Holz mit einer Kabine zur Aufnahme eines Werkstücks in einem Arbeitsbereich und einem vertikal verstellbaren Rollvorhang mit mindestens einer Sichtfläche und einem abdichtbaren Durchlass für ein in vertikaler Richtung mit dem Rollvorhang und in horizontaler Richtung auch automatisch führbares Strahlrohr. Einen Hinweis auf eine Verstellbarkeit für das automatisch führbare Strahlrohr senkrecht zur Ebene aus vertikaler und horizontaler Richtung gibt die EP 0 291 707 nicht. Hohe Kräfte auf das Strahlrohr beim Betrieb führen in Verbindung mit den Anforderungen an die zu fordernde Strahlgenauigkeit zu massiven paarweisen Standsäulen und paarweisen horizontalen Führungen für das automatisch führbare Strahlrohr. Die massiven paarweisen Standsäulen und paarweisen horizontalen Führungen unmittelbar vor dem vertikal verstellbaren Rollvorhang sind hinderlich für eine manuelle Handhabung des Strahlrohrs.

Aufgabe der Erfindung ist es, eine kostengünstige, automatische und vielseitig einsetzbare Sandstrahlvorrichtung zu schaffen.

Die Lösung erfolgt mit einer Sandstrahlvorrichtung, insbesondere zum Strahlen von Werkstücken aus Stein, Glas oder Holz, mit den Merkmalen des Anspruchs 1.

Gemäß der Erfindung weist eine Sandstrahlvorrichtung, insbesondere zum Strahlen von Werkstücken aus Stein, Glas oder Holz, eine als verschließbares Gehäuse ausgebildete Kabine auf zur Aufnahme mindestens eines Werkstücks in einem Arbeitsbereich. Die Kabine weist an mindestens einer vertikalen Frontseite eine durch einen vertikal verstellbaren Rollvorhang mit mindestens einer Sichtfläche im wesentlichen abgedeckte Öffnung zum Arbeitsbereich auf. Der Rollvorhang ist mit mindestens einem abdichtbaren Durchlass versehen für ein automatisch oder manuell führbares Strahlrohr auf große Arbeitsbereiche am Werkstück. Eine der vertikalen Frontseite mit Sichtfläche und vertikal verstellbarem Rollvorhang gegenüberliegende Rückwand der Kabine ist im wesentlichen nicht weiter als 1 m von dieser vertikalen Frontseite beabstandet und ein Boden der Kabine ist jeweils von der Frontseite und der gegenüberliegende Rückwand im wesentlichen trichterförmig zu einer parallel zur Frontseite und gegenüberliegenden Rückwand verlaufenden Absaugrinne geneigt. Erfindungsgemäß ist eine Automatik außerhalb der Kabine vor dem Rollvorhang vorgesehen zur regelbaren Führung des Strahlrohrs in im wesentlichen horizontaler und vertikaler Richtung, wobei das Strahlrohr verstellbar ist senkrecht zu einer von der horizontalen und vertikalen Richtung aufgespannten Ebene, so dass für automatischen Betrieb das Strahlrohr auf die Anforderungen plastischer Bearbeitungen flexibel in Richtung auch auf das Werkstück zu einstellbar ist. Die geringe Tiefe der Kabine von im wesentlichen nicht mehr als 1 m der erfindungsgemäß platzsparenden Sandstrahlvorrichtung ermöglicht das Auffangen des Strahlmittels in einer vorzugsweise asymmetrischen Trichterkonstruktion. Gemäß der Erfindung ist eine Rollvorhangkabine mit flächenmäßigem Zugriff auf ein Werkstück in der Kabine vorgesehen, die allein mit pneumatischer Rückförderung des Strahlmittels arbeitet und so den Anschluss serienmäßig bereits vorhandener Recycling-Strahlgeräte und damit eine kostengünstige Ergänzung bereits vorhandener Strahlgeräte erlaubt.

Gemäß der Erfindung weist die Automatik zur regelbaren Führung des Strahlrohrs einen im wesentlichen horizontalen Kragträger auf, der an einem im wesentlichen vertikalen Träger verschieblich montiert ist. Die Führung des Strahlrohrs ist entlang dem im wesentlichen horizontalen Kragträger verschieblich montiert.

Der im wesentlichen horizontale Kragträger ist vom Rollvorhang abkuppelbar und wegfahr- oder -schwenkbar.

Gemäß einer bevorzugten Ausgestaltung der Erfindung erfolgt die Verstellung des Strahlrohrs senkrecht zur von der horizontalen und vertikalen Richtung aufgespannten Ebene mechanisch manuell.

Gemäß einer weiteren bevorzugten Ausgestaltung der Erfindung sind der im wesentlichen horizontale Kragträger und/oder der im wesentlichen vertikale Träger jeweils aus einem metallischen Profil mit rautenförmigen Querschnitt gefertigt und die Führung für das Strahlrohr auf dem im wesentlichen horizontalen Kragträger und/oder der im wesentlichen horizontale Kragträger auf dem im wesentlichen vertikalen Träger werden jeweils verdrehsicher von sich paarweise gegenüberliegenden Prismenrädern zentriert geführt.

Gemäß einer weiteren bevorzugten Ausgestaltung der Erfindung sind der im wesentlichen horizontale Kragträger und/oder die Führung mit je einem Ketten- oder Zahnstangen-Direktantrieb verbunden.

Gemäß einer weiteren bevorzugten Ausgestaltung der Erfindung sind auf dem im wesentlichen horizontalen Kragträger und/oder dem im wesentlichen vertikalen Träger einstellbare Feldbegrenzungen vorgesehen sind, insbesondere als mechanische Endschalter, Sensoren oder Inkrementalgeber.

Vorteilhafterweise ist der im wesentlichen horizontale Kragträger für automatischen Betrieb mit dem Rollvorhang mechanisch verbunden, so dass der horizontale Kragträger vertikale Bewegungen mit dem Rollvorhang gemeinsam ausführt. Ist anstelle von automatischem Betrieb z. B. manueller Betrieb vorgesehen, wird der horizontale Kragträger vom Rollvorhang abgekuppelt und für verbesserten Zugang zum abdichtbaren Durchlass kann der horizontale Kragträger vom Rollvorhang weggefahren oder -geschwenkt werden.

Gemäß einer weiteren bevorzugten Ausgestaltung der Erfindung ist für die Automatik zur regelbaren Führung des Strahlrohrs ein Joystick vorgesehen, über den Strahlfelder einrichtbar sind, und die Automatik ist mit einem elektronischen Speicher versehen zur Übernahme der Daten von Strahlfeldern.

Gemäß einer weiteren bevorzugten Ausgestaltung der Erfindung ist zum platzsparenden Einbringen der Werkstücke in die Kabine parallel zur Frontseite und zur gegenüberliegenden Rückwand eine in die Kabine teleskopierbare Rollenbahn vorgesehen.

Gemäß einer weiteren bevorzugten Ausgestaltung der Erfindung ist die Sandstrahlvorrichtung verbunden mit einem als Druckstrahl-Blaster ausgebildeten kompakten Recyclingstrahlgerät, bei dem Strahlgerät, Strahlmittelrückgewinnung, Automatik für das Strahlrohr, Sichtung und Entstaubung zu einer kompletten Einheit zusammen gefasst sind, die an die Kabine anschließbar ist, wobei das Strahlgerät an das Strahlrohr und die Absaugrinne an die Strahlmittelrückgewinnung anschließbar sind.

Gemäß einer weiteren bevorzugten Ausgestaltung der Erfindung ist das Strahlrohr des kompakten Recyclingstrahlgeräts räumlich getrennt von der Strahlmittelrückgewinnung. Das gemäß der Erfindung von der Strahlmittelrückgewinnung räumlich getrennt Strahlrohr des kompakten Recyclingstrahlgeräts ermöglicht das Aufheben der Leistungsbegrenzung für das Strahlrohr und den Einsatz einer Kabine mit Rollvorhang und Automatik und verbessertem Zugriff in vertikaler und horizontaler Richtung und in Richtung senkrecht zum Werkstück.

Die Erfindung wird im Folgenden anhand eines bevorzugten Ausführungsbeispiels dargestellt. Es zeigen:
- Fig. 1:: eine Seitenansicht einer Kabine der erfindungsgemäßen Sandstrahlvorrichtung,
- Fig. 2:: eine Draufsicht der Kabine der erfindungsgemäßen Sandstrahlvorrichtung, und
- Fig. 3:: eine Querschnitt durch eine Kabine der erfindungsgemäßen Sandstrahlvorrichtung.

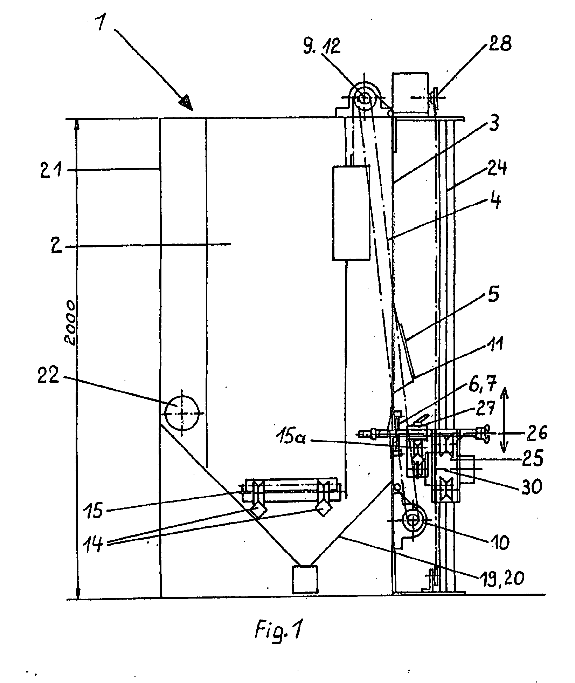

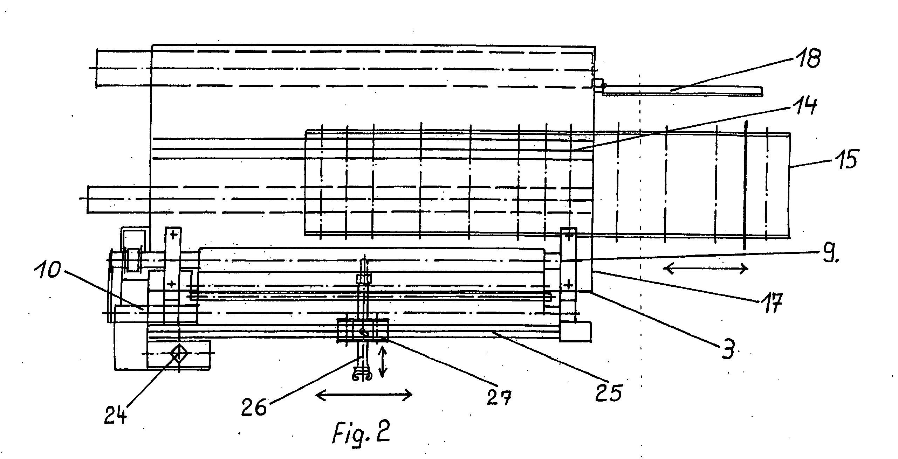

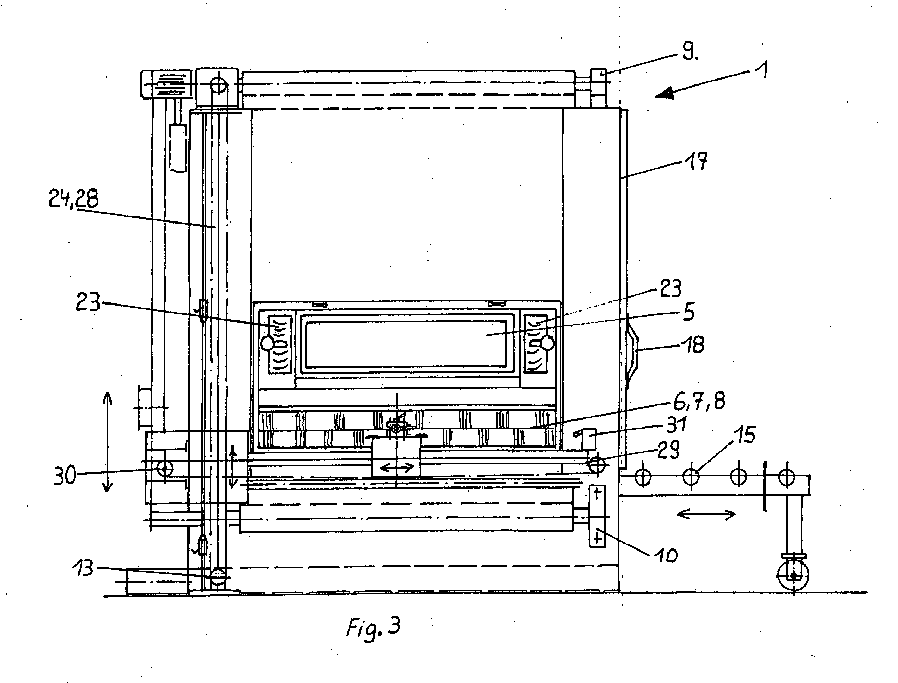

Fig. 1, 2 und 3: Eine Kabine 1 einer Sandstrahlvorrichtung zum Strahlen von Inschriften und Ornamenten auf Werkstücken (nicht dargestellt) aus Stein, Glas oder Holz weist ein starkwandiges, gekantetes Blechgehäuse mit ca. 1,8 m Breite, 1,0 m Tiefe, und 2,0 m Höhe auf mit einem Arbeitsbereich 2.

An einer vertikalen Frontseite 3 ist eine durch einen 1,3 m breiten, vertikal verstellbaren Rollvorhang 4 mit einer Sichtfläche 5 im wesentlichen abgedeckte Öffnung zum Arbeitsbereich 2 der Kabine 1 vorgesehen. Der Rollvorhang 4 ist mit einem horizontal ca. 1,2 m langen Durchlass 6 versehen für je ein in vertikaler Richtung mit dem Rollvorhang 4 und in horizontaler Richtung automatisch, motorisch oder manuell geführtes Strahlrohr 26 oder für den Durchgriff mit Armen um ein in der Kabine befindliches Strahlrohr zu nehmen, um in einem Arbeitsbereich von ca. 1,2 x 0,8 m zu arbeiten. Durchlass 6 ist innen mit Gummilippen 7 und außen mit Bürstenleisten 8 abgedichtet. Der Rollvorhang 4 ist an einer oberen groß dimensionierten Stahlachse 9 und einer unteren groß dimensionierten Stahlachse 10 kugelgelagert aufwickelbar geführt. Obere Achse 9 und untere Achse 10 halten den Rollvorhang 4 gegengewichts-ausbalanciert und selbstabdichtend laufend gespannt. Als Halogenfluter mit jeweils 300 Watt ausgeführte mitlaufende Leuchtkörper 23 sind seitlich der gegen Blendung schräg geneigten Sichtfläche 5 im Rollvorhang 4 mit Hitzeabweiser und Hitzeisolierung einstellbar angeordnet. Die Sichtfläche 5 ist doppelt verglast als Sicherheitsscheibe in einem Klapprahmen 11 ausgeführt. Die vertikale Frontseite 3 ist 1 m von einer gegenüberliegenden Rückwand 21 beabstandet.

Vor und im wesentlichen parallel zur vertikalen Frontseite 3 ist ein im wesentlichen vertikaler Träger 24 und vor und im wesentlichen parallel zum Durchlass 6 in Rollvorhang 4 ist ein im wesentlichen horizontaler Kragträger 25 vorgesehen, der einseitig am im wesentlichen vertikalen Träger 24 verschieblich montiert ist. Eine Führung 27 für das Strahlrohr 26 ist entlang dem im wesentlichen horizontalen Kragträger 25 verschieblich montiert. Die Führung 27 ist für das Strahlrohr 26 mit einer mechanisch manuell lösbaren Pressvorrichtung 28 versehen, in der das Strahlrohr 26 einstellbar entlang seiner axialen Richtung gehalten werden kann.

Der horizontale Kragträger 25 und der vertikale Träger 24 sind jeweils aus einem metallischen Profil mit rautenförmigen Querschnitt gefertigt. Die Führung 27 für das Strahlrohr 26 auf dem horizontalen Kragträger 25 und der horizontale Kragträger auf dem vertikalen Träger sind von jeweils 4 sich paarweise gegenüber liegenden Prismenrädern 15, die jeweils an die rautenförmigen Querschnitte des horizontalen Kragträgers 25 und des vertikalen Trägers 24 angepasst sind, zentrierend geführt.

Der horizontale Kragträger 25 entlang dem vertikalen Träger 24 und die Führung 27 entlang dem horizontalen Kragträger 25 sind mit je einer Kette 28, 29 von einem Elektromotor 30 angetrieben, wobei für die Automatik zur regelbaren Führung des Strahlrohrs 26 ein Joystick (nicht dargestellt) vorgesehen ist, über den Strahlfelder einrichtbar sind. Die Automatik ist mit einem elektronischen Speicher versehen zur Übernahme der Daten von Strahlfeldern.

Auf dem horizontalen Kragträger 25 ist eine einstellbare Feldbegrenzung 31 vorgesehen, z. B. als mechanischer Endschalter, Sensor oder Inkrementalgeber.

Der im wesentlichen horizontale Kragträger 25 ist für synchrone vertikale Bewegungen im automatischen Betrieb an dem Rollvorhang 4 abkuppelbar montiert und ist für manuellen Betrieb wegfahr- oder -schwenkbar (nicht dargestellt).

Die Kabine 1 ist im Innern mit weißem, freischwingendem, elektrostatisch leitfähigem Prallschutzmaterial mit einer Dicke von 3-4 mm gegen vorzeitigen Verschleiß ausgekleidet.

Die Kabine 1 weist einen Lufteinlaß 12 über dem Arbeitsbereich 2 und eine pneumatische Absaugrinne 13 zur Strahlmittelrückförderung unter dem Arbeitsbereich 2 für im wesentlichen von oben nach unten strömenden Luftwechsel in der Kabine 1 auf. Optional ist ein Filteranschluß 22 vorgesehen.

Eine in einer Führung 14 in der Kabine 1 teleskopierbare Rollenbahn 15 mit einer im wesentlichen ebenen Auflagefläche für im Strahlfeldbereich der Kabine 1 verfahrbare Werkstücke ist mit einem Führungsrad 16 von 400 mm bis zu 2000 mm ausziehbar aus der Kabine 1 zum Aufsetzen der Werkstücke. An der rechten Stirnwand 17 der Kabine 1 ist eine abgedichtete Flügeltür 18 vorgesehen. Bei geöffneter Flügeltür 18 ist die teleskopierbare Rollenbahn 15 aus und in die Kabine 1 fahrbar. Die geschlossene Flügeltür 18 sichert die teleskopierbare Rollenbahn 15 gegen verfahren und verhindert unbeabsichtigtes Ausfahren der teleskopierbaren Rollenbahn 15 aus der Kabine 1. Die Flügeltür 18 ist über 2 Spannelemente hermetisch abschließbar an der Kabine 1, wobei über eine Sicherheitsverriegelung (nicht dargestellt) die Strahlvorrichtung nur freigegeben wird bei geschlossener Flügeltür 18. Die Rollenbahn 15 hat eine Tragkraft von bis zu 1 to, Halterungen (nicht dargestellt), staubdicht gekapselte Lager, Prismenparabolrollen und Endschalterverrieglung verschlossen über Spannelemente dichtschließend.

Unterhalb der Rollenbahn 15 ist zur pneumatischen Absaugrinne 13 hin eine asymmetrische Trichterkonstruktion 19 in einem Boden 20 der Kabine 1 vorgesehen.

Kabine 1 ist für den Anschluß an einen Druckstrahl-Blaster (nicht dargestellt) gedacht, bei dem Strahlgerät mit 40 l Inhalt, Strahlmittelrückgewinnung, Sichtung und Entstaubung zu einer kompletten Einheit zusammengefaßt sind, die an die Kabine 1 anschließbar ist, wobei das Strahlgerät an das Strahlrohr mit 3 - 8 mm, vorzugsweise 4 mm oder 6 mm Düse und die Absaugrinne 13 außerhalb der Kabine 1 an die Strahlmittelrückgewinnung des Druckstrahl-Blasters jeweils räumlich voneinander getrennt anschließbar sind, so dass Entstaubung und Strahlmittelrückgewinnung automatisch in einem geschlossenen Kreislauf mit Filter erfolgt. Entstaubung und Strahlmittelrückgewinnung erfolgen also über die Absaugrinne 13 und das Strahlrohr mit Düse ist für das Arbeiten in der Kabine 1 vorgesehen, wobei die Leistung für Entstaubung und Strahlmittelrückgewinnung angepasst ist an die Menge des über das Strahlrohr ausgestoßenen Strahlmittels. Zusätzlich kann für verbesserte Sichtverhältnisse in der Kabine 1 und für Dauerbetrieb für große plastische Ornamente ein kompatibler Filter (nicht dargestellt) vom Typ Pla mit einem Fördervolumen von z. B. 15, 20 oder 25 m³/min angeschlossen werden.

Der Druckstrahl-Blaster ist auf einem fahrbaren Grundrahmen montiert und mit einem Fußtaster ausgestattet zum Steuern der stufenlosen Blasgutregulierung für die Strahlleistung in die Kabine 1. Der Druckstrahl-Blaster ist mit einem selbsttätigen Einfüllventil versehen. Zur Strahlmittelrückgewinnung ist ein 38, 50 oder 70 mm Rücksogschlauch vorgesehen, so dass Steinstaub und zerstrahltes Strahlmittel zuverlässig aus dem zurück gesaugten Strahlmittel ausgesondert und in einem abgestimmt ausgelegten Hochleistungszyklonabscheider abgeschieden wird und automatisch zur Absackung gelangt. Papierschnipsel und ähnliches werden auf einem über eine gesonderte Tür zugänglichen Strahlmaterialsieb zurückgehalten.

Entstaubung und Rückgewinnung erfolgt durch eine Patronenfiltereinheit mit 4 Patronenfiltern, Abreinigungsvorrichtung und aufgesetztem Drehstrom-Rücksogventilator, der dem Filtern nachgeschaltet und daher vor Verschleiß geschützt ist. Feinstaub fällt in einen Sammelkübel zur Entsorgung.

Ein separater Ausblasschalldämpfer ist vorgesehen.

## Patentansprüche

1. Sandstrahlvorrichtung, insbesondere zum Strahlen von Werkstücken aus Stein, Glas oder Holz, mit einer als verschließbares Gehäuse ausgebildeten Kabine (1) zur Aufnahme mindestens eines Werkstücks in einem Arbeitsbereich (2), die an mindestens einer vertikalen Frontseite (3) eine durch einen vertikal verstellbaren Rollvorhang (4) mit mindestens einer Sichtfläche (5) im wesentlichen abgedeckte Öffnung zum Arbeitsbereich (2) aufweist, wobei der Rollvorhang (4) mit mindestens einem abdichtbaren Durchlass (6) für je ein Strahlrohr (26) versehen ist, eine der vertikalen Frontseite (3) mit Sichtfläche (5) und vertikal verstellbarem Rollvorhang (4) gegenüberliegende Rückwand (21) der Kabine (1) im wesentlichen nicht weiter als 1 m von dieser vertikalen Frontseite (3) beabstandet ist und ein Boden (20) der Kabine (1) jeweils von der Frontseite (3) und der gegenüberliegende Rückwand (21) im wesentlichen trichterförmig zu einer parallel zur Frontseite (3) und gegenüberliegenden Rückwand (21) verlaufenden Absaugrinne (13) geneigt ist,
**dadurch gekennzeichnet, dass**
eine Automatik vorgesehen ist zur regelbaren Führung (27) des Strahlrohrs (26) in im wesentlichen horizontaler und vertikaler Richtung und das Strahlrohr (26) verstellbar ist senkrecht zu einer von der horizontalen und vertikalen Richtung aufgespannten Ebene, wobei die Automatik zur regelbaren Führung (27) des Strahlrohrs (26) einen im wesentlichen horizontalen Kragträger (25) aufweist, der an einem im wesentlichen vertikalen Träger (24) verschieblich montiert ist, die Führung (27) des Strahlrohrs (26) entlang dem im wesentlichen horizontalen Kragträger (25) verschieblich montiert ist und der horizontale Kragträger (25) vom Rollvorhang (4) abkuppelbar und wegfahr- oder -schwenkbar ist.

2. Sandstrahlvorrichtung gemäß Anspruch 1, **dadurch gekennzeichnet, dass** die Verstellung des Strahlrohrs (26) senkrecht zur von der horizontalen und vertikalen Richtung aufgespannten Ebene mechanisch manuell erfolgt.

3. Sandstrahlvorrichtung gemäß Anspruch 1, **dadurch gekennzeichnet, dass** der horizontale Kragträger (25) und/oder der vertikale Träger (24) jeweils aus einem metallischen Profil mit rautenförmigem Querschnitt gefertigt ist/sind und die Führung (27) für das Strahlrohr (26) auf dem horizontalen Kragträger (25) und/oder der horizontale Kragträger (24) auf dem vertikalen Träger (24) von sich paarweise gegenüberliegenden Prismenrädern (15a) zentriert geführt werden.

4. Sandstrahlvorrichtung gemäß Anspruch 1, **dadurch gekennzeichnet, dass** der horizontale Kragträger (25) und/oder die Führung (27) mit je einem Ketten- oder Zahnstangen-Direktantrieb (28, 29) verbunden sind.

5. Sandstrahlvorrichtung gemäß Anspruch 1, **dadurch gekennzeichnet, dass** auf dem horizontalen Kragträger (25) und/oder dem vertikalen Träger (24) einstellbare Feldbegrenzungen (31) vorgesehen sind, insbesondere als mechanische Endschalter, Sensoren oder Inkrementalgeber.

6. Sandstrahlvorrichtung gemäß Anspruch 1, **dadurch gekennzeichnet, dass** für die Automatik zur regelbaren Führung (27) des Strahlrohrs (26) ein Joystick vorgesehen ist, über den Strahlfelder einrichtbar sind, und die Automatik mit einem elektronischen Speicher versehen ist zur Übernahme von Strahlfeldern.

7. Sandstrahlvorrichtung gemäß Anspruch 1, **dadurch gekennzeichnet, dass** die Kabine (1) einen Lufteinlass (12) über dem Arbeitsbereich (2) und eine Absaugrinne (13) unter dem Arbeitsbereich (2) für im wesentlichen von oben nach unten strömenden Luftwechsel in der Kabine (1) aufweist.

8. Sandstrahlvorrichtung gemäß Anspruch 1, **dadurch gekennzeichnet, dass** eine parallel zur Frontseite (3) und gegenüberliegender Rückwand teleskopierbare Rollenbahn (15) in der Kabine (1) vorgesehen ist.

9. Sandstrahlvorrichtung gemäß einem der vorhergehenden Ansprüche mit einem kompakten Recyclingstrahlgerät, bei dem Strahlgerät, Strahlmittelrückgewinnung, Automatik, Sichtung und Entstaubung zu einer kompletten Einheit zusammengefasst sind und das Strahlgerät an die Kabine und an das Strahlrohr und die Absaugrinne (13) an die Strahlmittelrückgewinnung angeschlossen sind.

10. Sandstrahlvorrichtung gemäß Anspruch 9, **dadurch gekennzeichnet, dass** das Strahlrohr (26) des kompakten Recyclingstrahlgeräts getrennt ist von der Strahlmittelrückgewinnung.

## Claims

1. Sandblast device especially for sandblasting stone, glass or wood with a cabinet like a closable housing (1) for a content of at least 1 work piece in a field of application (2) with one opening to the field of application (2) which is closed by a vertically adjustable roller curtain (4) with at least one vertical front side (3) with at least one viewing window (5) while the roller curtain (4) is fitted with at least one passage which can be tightened (6) for one blasting lance (26) while one vertical front side (3) with viewing window (5) and vertically adjustable roller curtain (4) is opposite to the back wall (21) of the cabinet (1) essentially not further than 1 m from the vertical front side (3) in distance and a ground (20) of the cabinet (1) which is as well from the front side (3) and the opposite back wall (21) formed like a hopper parallel to the front side (3) and the opposite back wall (21) having a suction chute (13) **characterized by** an automatic for the adjustable guiding (27) of the blasting lance (26) in mostly horizontal and vertical direction and the blasting lance (26) is adjustable square to a plane which is in front and in a horizontal vertical direction while the automatic for the adjustable guiding (27) of the blasting lance (26) has a mainly horizontal arm (25) which is fixed at a mainly vertical column (24) mounted displaceably and the guiding (27) of the blasting lance (26) along the mainly horizontal arm (25) mounted displaceably and the horizontal arm (25) can be uncoupled, driven away or tilted from the roller curtain (4).

2. sandblast device according to claim 1 that the adjustment of the blasting lance (26) rectangular to the plane in front of the horizontal and vertical movement will be done manually.

3. sandblast device according to claim 1 with a horizontal arm (25) and/or vertical column (24) is made out of metallic profile with rhombic cross section and the guiding (27) for the blasting lance (26) on the horizontal arm (25) and/or the horizontal arm (24) on the vertical column (24) is guided and centred by parabolic rollers in V-shape (15a)

4. sandblast device according to claim 1, **characterized by** the fact that a horizontal arm (25) and/or the trolley (27) is fitted with a chain or tooth track drive (28, 29).

5. sandblast device according to claim 1, **characterized by** the fact that on the horizontal arm (25) and/or the vertical column (24) adjustable field marks (31) are fixed, especially as adjustable mechanical final switches, sensors or incremental measuring devices.

6. sandblast device according to claim 1, **characterized by** the fact that for the automatic for the regulatable guiding (27) of the blasting lance (26) a joystick is available with which the fields of application by the sandblast can be adjusted and the automatic is fitted with an electronic PLC memory for taking into acceptance the fields of application.

7. sandblast device according to claim 1, **characterized by** the fact that the cabinet (1) has an air inlet (12) over the field of application (2) and a suction chute (13) under the field of application (2) for an essential air flow from top to downwards in the cabinet (1)

8. sandblast device according to claim 1, **characterized by** the fact that inside of the cabinet there is in parallel to the front side (3) and the opposite back side a telescopic roller track (15) in the cabinet (1)

9. sandblast device according to one of the claims before is fitted with a complete recycling sandblasting unit where the sandblast pot, sandblast reclaiming system, automatic, cleaning and dust extraction are built to a complete unit and that unit is connected to the cabinet with blasting lance and the recovery chute (13) to the reclaiming system

10. sandblast device according to claim 9, **characterized by** the fact that the blasting lance (26) of the complete recycling sandblasting unit is separated from the reclaiming system.

## Revendications

1. installation de sablage, spécialement pour le sablage de pierre, verre ou bois avec une cabine en caisse charnière (1) pour accueillir au moins une pièce à travailler dans un rayon de travail (2), qui a au minimum à un front vertical (3) un rideau mobile ajustable verticalement (4) avec au minimum une fenêtre d'observation (5) sur le rayon de travail (2) et le rideau mobile (4) est muni au minimum d'un passage (6) pour une lance de sablage (26), un front vertical (3) avec fenêtre d'observation (5) et rideau mobile ajustable (4) avec muraille opposée au fond (21) de la cabine (1) avec une distance moyenne pas plus qu'un mètre de ce front vertical (3) et un sol (20) de la cabine (1) qui est formé en entonnoir du front de la cabine (3) et la muraille opposée au fond (21) en parallèle au front (3) muni d'une chute d'aspiration (13), **caractérisé par** un automatisme pour le guidage réglable (27) d'une lance de sablage (26) dans une direction principalement horizontale et verticale avec la lance de sablage (26) qui est ajustable en angle droit à un panneau dans un sens horizontal et vertical ainsi que l'automatisme pour le guidage réglable (27) de la lance de sablage (26) à un bras horizontal (25) qui est monté mobilement à une colonne verticale (24) ainsi que le guidage (27) de la lance de sablage (26) pour le bras horizontal (25) est mobile et ce bras horizontal (25) peut être décroché, séparé ou pivoté du rideau mobile (4).

2. installation de sablage selon revendication 1, définie par l'ajustage de la lance de sablage (26) manuellement en angle droit à un panneau qui va horizontalement et verticalement dans cette direction

3. installation de sablage selon revendication 1, définie par le fait que le bras horizontal (25) et/ou la colonne verticale (24) fait d'un profilé en métal avec une coupe transversale en forme d'un rhombe et le guidage (27) de la lance de sablage (26) sur le bras horizontal (25) et/ou le bras horizontal (24) est sur la colonne verticale (24) en tenue guidé par les roues paraboliques (15a) opposées.

4. installation de sablage selon revendication 1, définie par le fait que le bras horizontal (25) et/ou le guidage (27) sont d'équipés d'un entraînement par chaîne au crémaillère (28,29).

5. installation de sablage selon revendication 1, définie par le fait que sur le bras horizontal (25) et/ou la colonne verticale (24) il y a des limitations ajustables (31) par spécialement des fins-de course, des détecteurs ou des systèmes incrémentales.

6. installation de sablage selon revendication 1, définie par le fait que pour l'automatisme du guidage réglable (27) de la lance de sablage (26) il y a un joystick avec lequel les champs de travail sont ajustables et l'automatisme avec PLC est capable de mémoriser ces champs de travail.

7. installation de sablage selon revendication 1, définie par le fait que la cabine (1) a une entrée d'air (12) au-dessus du champ de travail (2) et une chute d'aspiration (13) au-dessous du champs de travail (2) qui donne une fleuve d'air d'en haut vers le bas dans la cabine (1).

8. installation de sablage selon revendication 1, définie par le fait qu' en parallèle au front (3) et opposé du fond il y a une bande télescopique de transporteur à rouleaux (15) dans la cabine (1)

9. installation de sablage selon une des revendications mentionnées ci-dessus avec une installation de sablage à recyclage chez lequel l'appareil de sablage, récupération d'abrasif, automatisme, nettoyage de l'abrasif et dépoussiérage sont concentrés dans une installation complète et l'appareil de sablage est raccordé avec la lance de sablage et la chute de récupération (13) à la récupération de cet appareil

10. installation de sablage selon revendication 9, définie par le fait que la lance de sablage (26) de l'installation de sablage à recyclage est séparée de la recyclage de l'abrasif.
